# EUROPÄISCHE PATENTANMELDUNG

(11) **EP 1 493 976 A2**
(43) Veröffentlichungstag der Anmeldung: **05.01.2005**
(21) Anmeldenummer: 04014222.6
(22) Anmeldetag: 17.06.2004
(51) Int. Cl.: F24J 2/40

(54) **Verfahren zum Regeln einer Solaranlage**

(30) Priorität: 27.06.2003 DE 10328927
(71) Anmelder: BBT Thermotechnik GmbH, 35576 Wetzlar (DE)
(72) Erfinder: Kosok, Jürgen, 48565 Steinfurt (DE)

(57) **Zusammenfassung**

Die Erfindung betrifft ein Verfahren zum Regeln einer Solaranlage zur Warmwasserbereitung mit einem konventionellen Warmwasserspeicher (2), an den mindestens ein Warmwasserverbraucher (3) angeschlossen ist, sowie mit einer diesen speisenden Vorwärmstufe, bestehend aus mindestens einem an eine Kaltwasserleitung (4) angeschlossenen Warmwasserspeicher als Vorwärmspeicher (5), welcher über einen zwischengeschalteten Wärmetauscher (6) mit mindestens einem in einen Solarkreislauf integrierten Pufferspeicher (7) verbunden ist. Dabei steuert ein Regler (8) den Betrieb der Pumpen (9, 9') auf beiden Seiten des Wärmetauschers (6) im Ladesystem gemäß den Messwerten von Temperaturfühlem (10, 10', 10", 10'"), welche sich insbesondere in unterschiedlichen Höhenbereichen des Vorwärmspeichers (5), am Vorlauf des Wärmetauschers (6) sowie im oberen Bereich des Pufferspeichers (7) befinden. In regelmäßigen Zeitabständen muss eine thermische Desinfektion des Warmwassersystems durchgeführt werden. Dann wird der gesamte Trinkwasserbereich der Vorwärmstufe einschließlich des Vorwärmspeichers (5) entsprechend aufgeheizt.

Der Erfindung liegt die Aufgabe zugrunde, den Wirkungsgrad und das Betriebsverhalten einer Solaranlage zur Warmwasserbereitung zu optimieren.

Gekennzeichnet ist das erfindungsgemäße Verfahren dadurch, dass die auf Messwerte des Temperaturfühlers (10') im unteren Bereich des Vorwärmspeichers (5) bezogene Hysterese als Differenz zwischen der Ein- und der Ausschalttemperatur für die beiden Pumpen (9, 9') des Ladesystems unterhalb einer vorzugebenden Warmwassertemperatur im Vorwärmspeicher (5) vom Regler (8) größer eingestellt wird als oberhalb der vorzugebenden Warmwassertemperatur.

## Beschreibung

Die Erfindung betrifft ein Verfahren zum Regeln einer Solaranlage zur Warmwasserbereitung nach dem Oberbegriff des Patentanspruches 1.
Gattungsgemäße Solaranlagen für die Erwärmung von Trink- oder Brauchwasser bestehen im Wesentlichen aus einem konventionellen Warmwasserspeicher, an den mindestens ein Warmwasserverbraucher angeschlossen ist, sowie einer diesen Warmwasserspeicher speisenden Vorwärmstufe. Diese besteht wiederum aus mindestens einem an die Kaltwasserleitung angeschlossenen Warmwasserspeicher als Vorwärmspeicher, welcher über einen zwischengeschalteten Wärmetauscher mit mindestens einem solar beheizten Pufferspeicher verbunden ist. In diesem befindet sich lediglich Heizwasser. Mit einem Regelgerät wird der Betrieb der Umwälzpumpen auf den beiden Seiten des Wärmetauschers gemäß den Messwerten von Temperaturfühlern gesteuert. Diese befinden sich insbesondere in unterschiedlichen Höhenbereichen des Vorwärmspeichers, am Vorlauf des Wärmetauschers sowie im oberen Bereich des Pufferspeichers.
Für einen günstigen Wirkungsgrad der Solaranlage ist es natürlich wichtig, dass vorrangig das solare Wärmeangebot zum Aufheizen des Pufferspeichers und der Warmwasserspeicher dient bzw. dass es den angeschlossenen Verbrauchern zur Verfügung steht. Eine Nachladung oder Zusatzheizung durch einen Heizkessel soll nach Möglichkeit nur in wenigen Fällen erfolgen. Trotzdem kann die Warmwasser-Solltemperatur nicht allzu tief abgesenkt werden, weil dann ein Nachteil entsteht: die mögliche Vermehrung von im Trinkwasser vorhandenen Bakterien. Als Krankheitserreger in Warmwasseranlagen sind insbesondere sogenannte Legionellen bekannt. Diese Mikroorganismen können aber abgetötet werden, wenn die Temperatur des Warmwassers kurzzeitig über 60 °C beträgt. Bekannt sind daher spezielle hydraulische Schaltungen zur thermischen Desinfektion von Warmwasserspeichern, welche hauptsächlich dazu dienen, die notwendige Temperatur auch im unteren Speicherbereich bereitzustellen.

Zum Beispiel kann eine externe Umwälzung des Wassers über eine Verbindungsleitung vom oberen zum unteren Speicherbereich erfolgen. Enthält die Systemtechnik einen Vorwärmspeicher in einer Vorwärmstufe, so kann über eine Verbindungsleitung, welche von der zum Verbraucher führenden Warmwasserleitung ausgeht und in den Kaltwasserzulauf mündet, der gesamte Trinkwasserbereich einer Anlage, einschließlich der Vorwärmstufe, kurzzeitig über 60 °C aufgeheizt werden. Verordnungen schreiben diese thermische Desinfektion einmal am Tag vor.
Um hohe solare Erträge mit der vorstehenden Systemtechnik über einem Vorwärmspeicher zu erzielen, müsste grundsätzlich die Abschaltung einer Ladung über den zwischengeschalteten Wärmetauscher dann erfolgen, wenn die Temperatur im Vorwärmspeicher noch relativ niedrig ist. Damit wäre die Rücklauftemperatur des Ladesystems am Wärmetauscher auf einem niedrigen Niveau. Die Hysterese, also die Differenz zwischen der Maximal- und der Ausschalttemperatur für die beiden Pumpen des Ladesystems, müsste somit einen relativ hohen Wert haben, beispielsweise 10 Kelvin.
Andererseits soll die vorgeschriebene thermische Desinfektion im Trinkwarmwasser-Bereich grundsätzlich aber möglichst mit solarer, und nicht mit konventionell erzeugter Wärme durchgeführt werden. Um über den zwischengeschalteten Wärmetauscher 60 °C im Vorwärmspeicher zu erreichen, ist eine Temperatur von über 65 °C im solaren Heizwasser-Volumen im Pufferspeicher notwendig. In diesem Fall darf ein optimaler Wert für die Hysterese nur sehr klein sein und würde beispielsweise bei 2 Kelvin liegen.

Der Erfindung liegt daher die Aufgabe zu Grunde, den Wirkungsgrad einer Solaranlage zur Warmwasserbereitung zu verbessern. Dabei sollen insbesondere der Legionellen-Schutz sowie die damit zusammenhängenden Abschaltkriterien optimiert werden, bei denen die Ladung eines Warmwasserspeichers als Vorwärmspeicher über einen zwischengeschalteten Wärmetauscher aus einem solar beheizten Pufferspeicher beendet werden soll.

Erfindungsgemäß wird dies mit den Merkmalen des Patentanspruches 1 gelöst. Vorteilhafte Weiterbildungen sind den Unteransprüchen zu entnehmen.
Das Verfahren zum Regeln einer Solaranlage zur Warmwasserbereitung ist dadurch gekennzeichnet, dass die auf Messwerte des Temperaturfühlers im unteren Bereich des Vorwärmspeichers bezogene Hysterese als Differenz zwischen der Ein- und der Ausschalttemperatur für die beiden Pumpen des Ladesystems unterhalb einer vorzugebenden Warmwassertemperatur im Vorwärmspeicher vom Regler größer eingestellt wird als oberhalb der vorzugebenden Warmwassertemperatur. Dabei entspricht die vorzugebende Warmwassertemperatur mindestens dem für die thermische Desinfektion des Warmwassersystems erforderlichen Temperaturwert und ist vorzugsweise auf mindestens 60 °C eingestellt.

Die auf Messwerte des Temperaturfühlers im unteren Bereich des Vorwärmspeichers bezogene Hysterese für das Beenden einer Ladung beträgt vorzugsweise 10 Kelvin wenn erstens die vorzugebende Warmwassertemperatur kleiner als 60 °C eingestellt ist oder zweitens die Temperatur des Pufferspeichers zu klein ist, um eine ausreichende Ladung des Vorwärmspeichers für die thermische Desinfektion zu erzielen.

Um eine thermische Desinfektion mit Warmwasser aus dem Pufferspeicher durchzuführen, wird die auf Messwerte des Temperaturfühlers im unteren Bereich des Vorwärmspeichers bezogene Hysterese für das Beenden einer Ladung vorzugsweise vom Regler auf 2 Kelvin eingestellt. Dies ist bei folgenden Bedingungen der Fall, nämlich wenn erstens die vorzugebende Warmwassertemperatur des Vorwärmspeichers auf Werte von mindestens 60 °C eingestellt ist, zweitens die Temperatur des Pufferspeichers im Verlauf der Ladung Werte von mindestens 65 °C zeigt und am Temperaturfühler im unteren Bereich des Vorwärmspeichers bereits die Bedingung für das Abschalten der Ladung mit großer Hysterese von vorzugsweise 10 Kelvin erreicht ist.

Generell muss die Aufheizung des Warmwassersystems auf eine vorzugebende Warmwassertemperatur für eine thermische Desinfektion mit solarer Wärme aus dem Pufferspeicher vom Regler nur einmal in vorzugebenden Zeitabständen, vorzugsweise nur einmal täglich, erzielt werden. Nach dem einmaligen Erreichen der vorzugebenden Warmwassertemperatur für eine thermische Desinfektion ist nur noch die größere Hysterese für eine Maximierung der solaren Erträge gültig.

Mit der Erfindung steht ein einfaches Verfahren zur Verfügung, mit dem nicht nur der Wirkungsgrad einer Solaranlage zur Warmwasserbereitung verbessert wird, sondern insbesondere auch der Legionellen-Schutz sowie die damit zusammenhängenden Abschaltkriterien optimiert werden, bei denen die Ladung eines Warmwasserspeichers als Vorwärmspeicher über einen zwischengeschalteten Wärmetauscher aus einem solar beheizten Pufferspeicher beendet werden soll.
Zur Durchführung des erfindungsgemäßen Verfahrens zur Warmwasserbereitung sind keine zusätzlichen Temperaturfühler erforderlich, weil lediglich die vorhandenen Messstellen vom Regler anders genutzt werden.

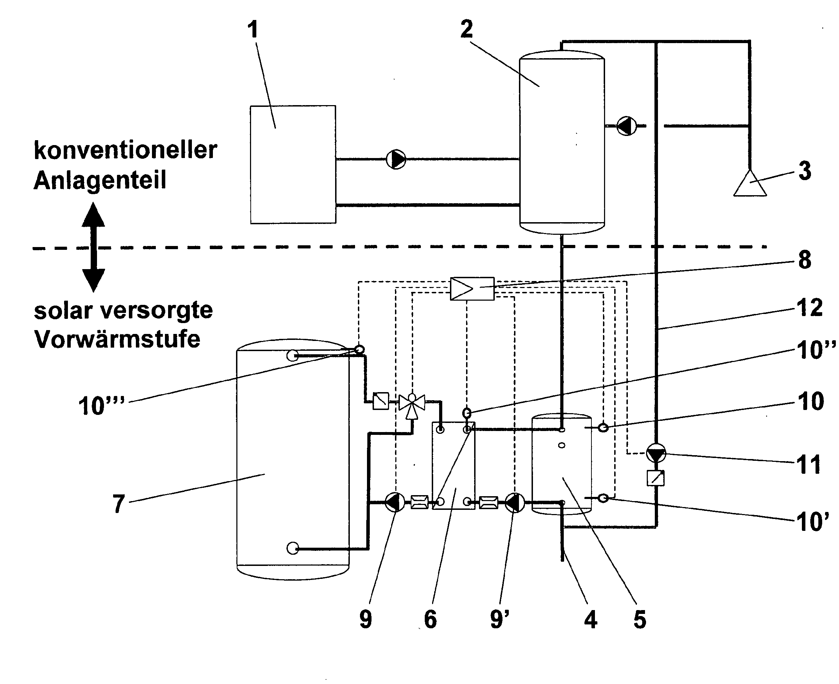

Die Zeichnung stellt ein Ausführungsbeispiel der Erfindung dar und zeigt in einer einzigen Figur den schematischen Aufbau einer Solaranlage zur Durchführung des erfindungsgemäßen Verfahrens zur Warmwasserbereitung.

Die Anlage zur Warmwasserbereitung gliedert sich im Wesentlichen in einen konventionellen Anlagenteil mit einem Heizkessel 1 zur Nachladung eines Warmwasserspeichers 2, an den ein Warmwasserverbraucher 3 angeschlossen ist, sowie einer solar versorgten Vorwärmstufe. Diese speist den Warmwasserspeicher 2 und besteht aus einem an die Kaltwasserleitung 4 angeschlossenen Warmwasserspeicher als Vorwärmspeicher 5, welcher über einen zwischengeschalteten Wärmetauscher 6 mit einem in einen Solarkreislauf integrierten Pufferspeicher 7 verbunden ist. Dabei steuert ein Regler 8 den Betrieb der Pumpen 9, 9' auf beiden Seiten des Wärmetauschers 6 im Ladesystem gemäß den Messwerten von Temperaturfühlern 10, 10', 10", 10''', welche sich insbesondere in unterschiedlichen Höhenbereichen des Vorwärmspeichers 5, am Vorlauf des Wärmetauschers 6 sowie im oberen Bereich des Pufferspeichers 7 befinden.
In regelmäßigen Zeitabständen muss eine thermische Desinfektion durch Aufheizung des Warmwassersystems auf eine vorzugebende Warmwassertemperatur durchgeführt werden. Dann wird mit dem Betrieb der Pumpe 11 über eine Verbindungsleitung 12, welche von der zum Warmwasserverbraucher 3 führenden Warmwasserleitung ausgeht und in die Kaltwasserleitung 4 mündet, der gesamte Trinkwasserbereich der Vorwärmstufe einschließlich des Vorwärmspeichers 5 thermisch desinfiziert.

## Patentansprüche

1. Verfahren zum Regeln einer Solaranlage zur Warmwasserbereitung mit einem konventionellen Warmwasserspeicher (2), welcher an den mindestens ein Warmwasserverbraucher (3) angeschlossen ist, sowie mit einer diesen speisenden Vorwärmstufe, bestehend aus mindestens einem an die Kaltwasserleitung (4) angeschlossenen Warmwasserspeicher als Vorwärmspeicher (5), welcher über einen zwischengeschalteten Wärmetauscher (6) mit mindestens einem in einen Solarkreislauf integrierten Pufferspeicher (7) verbunden ist, wobei ein Regelgerät (8) den Betrieb der Umwälzpumpen (9, 9') auf beiden Seiten des Wärmetauschers (6) im Ladesystem gemäß den Messwerten von Temperaturfühlern (10, 10', 10", 10"') steuert, welche sich insbesondere in unterschiedlichen Höhenbereichen des Vorwärmspeichers (5), am Vorlauf des Wärmetauschers (6) sowie im oberen Bereich des Pufferspeichers (7) befinden, und wobei in regelmäßigen Zeitabständen eine thermische Desinfektion durch Aufheizung des Warmwassersystems auf eine vorzugebende Warmwassertemperatur durchzuführen ist,
**dadurch gekennzeichnet, dass** die auf Messwerte des Temperaturfühlers (10') im unteren Bereich des Vorwärmspeichers (5) bezogene Hysterese als Differenz zwischen der Einund der Ausschalttemperatur für die beiden Pumpen (9, 9') des Ladesystems unterhalb einer vorzugebenden Warmwassertemperatur im Vorwärmspeicher (5) vom Regler (8) größer eingestellt wird als oberhalb der vorzugebenden Warmwassertemperatur.

2. Verfahren nach Anspruch 1,
**dadurch gekennzeichnet, dass** die vorzugebende Warmwassertemperatur mindestens dem für die thermische Desinfektion des Warmwassersystems erforderlichen Temperaturwert entspricht und vorzugsweise auf mindestens 60 °C eingestellt ist.

3. Verfahren nach Anspruch 1 oder 2,
**dadurch gekennzeichnet, dass** die auf Messwerte des Temperaturfühlers (10') im unteren Bereich des Vorwärmspeichers (5) bezogene Hysterese für das Beenden einer Ladung vorzugsweise 10 Kelvin beträgt wenn
a) die vorzugebende Warmwassertemperatur kleiner als 60°C eingestellt ist oder
b) die Temperatur des Pufferspeichers (7) zu gering ist, um eine ausreichende Ladung des Vorwämspeichers (5) für die thermische Desinfektion zu erzielen.

4. Verfahren nach einem der Ansprüche 1 bis 3,
**dadurch gekennzeichnet, dass** die auf Messwerte des Temperaturfühlers (10') im unteren Bereich des Vorwärmspeichers (5) bezogene Hysterese für das Beenden einer Ladung vorzugsweise vom Regler auf 2 Kelvin verändert wird, um eine thermische Desinfektion mit Warmwasser aus dem Pufferspeicher (7) durchzuführen, wenn
a) die vorzugebende Warmwassertemperatur des Vorwärmspeichers (5) auf Werte von mindestens 60 °C eingestellt ist und
b) die Temperatur des Pufferspeichers (7) im Verlauf der Ladung Werte von mindestens 65 °C zeigt und
c) am Temperaturfühler (10') im unteren Bereich des Vorwärmspeichers (5) bereits die Bedingung für das Abschalten der Ladung mit großer Hysterese von vorzugsweise 10 Kelvin erreicht ist.

5. Verfahren nach einem der Ansprüche 1 bis 4,
**dadurch gekennzeichnet, dass** die Aufheizung des Warmwassersystems auf eine vorzugebende Warmwassertemperatur für eine thermische Desinfektion mit solarer Wärme aus dem Pufferspeicher (7) vom Regler (8) nur einmal in vorzugebenden Zeitabständen, vorzugsweise nur einmal täglich, erzielt werden muss.

6. Verfahren nach einem der Ansprüche 1 bis 5,
**dadurch gekennzeichnet, dass** nach dem einmaligen Erreichen der vorzugebenden Warmwassertemperatur für eine thermische Desinfektion nur noch die größere Hysterese für eine Maximierung der solaren Erträge gültig ist.
